# EUROPÄISCHE PATENTSCHRIFT

(11) **EP 2 137 226 B1**
(45) Veröffentlichungstag und Bekanntmachung des Hinweises auf die Patenterteilung: **22.09.2010**
(21) Anmeldenummer: 08735441.1
(22) Anmeldetag: 20.03.2008
(51) Int. Cl.: C08G 18/12, C09J 163/00, C08L 63/00

(54) **EPOXIDGRUPPEN TERMINIERTE POLYMERE, DEREN ZUSAMMENSETZUNGEN UND DEREN VERWENDUNG ALS SCHLAGZÄHIGKEITSMODIFIKATOREN**
EPOXY GROUP-TERMINATED POLYMERS, THEIR COMPOSITIONS AND THEIR UTILISATION AS IMPACT RESISTANCE MODIFIERS
POLYMÈRES TERMINÉS PAR DES GROUPES ÉPOXY, LEUR PRÉPARATION ET LEUR UTILISATION COMME MODIFICATEURS RÉSISTANTS AUX CHOCS

(30) Priorität: 20.03.2007 EP 07104488
(43) Veröffentlichungstag der Anmeldung: 30.12.2009
(73) Patentinhaber: Sika Technology AG, 6340 Baar (CH)
(72) Erfinder: FINTER, Jürgen, CH-8037 Zürich (CH); KRAMER, Andreas, CH-8006 Zürich (CH)
(74) Vertreter: Sika Patent Attorneys
(86) Internationale Anmeldenummer: PCT/EP2008/053342
(87) Internationale Veröffentlichungsnummer: WO 2008/113845

(56) Entgegenhaltungen:
- WO-A-01/23466
- WO-A-2004/055092
- WO-A-2005/007720
- US-A1- 2002 061 970
- DER-SHYANG CHEN ET AL: "PREPARATION AND CHARACTERIZATION OF CRYOGENIC ADHESIVES I. GLYCIDYL-TERMINATED POLYURETHANE RESINS" JOURNAL OF APPLIED POLYMER SCIENCE, JOHN WILEY AND SONS INC. NEW YORK, US, Bd. 51, Nr. 7, 14. Februar 1994 (1994-02-14), Seiten 1199-1206, XP000465167 ISSN: 0021-8995

## Beschreibung

### Technisches Gebiet

Die Erfindung betrifft das Gebiet der Schlagzähigkeitsmodifikatoren und das Gebiet der Epoxidharzzusammensetzungen.

### Stand der Technik

Schlagzähigkeitsmodifikatoren werden schon seit langem dazu eingesetzt, um die Festigkeit von Klebstoffen bei schlagartiger Krafteinwirkung zu verbessern. Insbesondere Epoxidharzzusammensetzungen weisen generell zwar hohe mechanische Festigkeiten auf, sind jedoch sehr spröde, das heisst, bei einer schlagartigen Krafteinwirkung, wie sie beispielsweise in einem Zusammenstoss von Fahrzeugen eintritt, bricht das gehärtete Epoxidharz und führt zu einer Zerstörung des Verbundes.

Flüssigkautschuke werden schon seit längerem zur Zähigkeitsmodifizierung eingesetzt. Beispielsweise werden Flüssigkautschuke auf Basis von Acrylnitril/Butadien-Copolymeren, wie sie beispielsweise unter dem Namen Hycar® erhältlich sind, eingesetzt.

WO-A-03/093387 offenbart schlagzähe Epoxidharzzusammensetzungen, welche Addukte von Dicarbonsäuren mit Glycidylethern oder von Bis(aminophenyl)sulfon-Isomeren oder aromatischen Alkoholen mit Glycidylethern enthalten. Diese Zusammensetzungen weisen jedoch Defizite in der Tieftemperaturschlagzähigkeit (<0°C) auf.

WO-A-2004/055092, WO-A-2005/007720 und WO-A-2007/003650 offenbaren Epoxidharzzusammensetzungen mit verbesserter Schlagzähigkeit, welche ein Reaktionsprodukt eines Isocyanatgruppen-terminierten Polyurethanprepolymeren mit einem Monohydroxyepoxid enthalten. Diese Zusammensetzungen weisen jedoch für gewisse Anwendungen immer noch nicht optimale Schlagzähigkeiten, insbesondere Tieftemperaturschlagzähigkeiten, auf.

### Darstellung der Erfindung

Aufgabe der vorliegenden Erfindung ist es daher, Schlagzähigkeitsmodifikatoren zur Verfügung zu stellen, welche in der Lage sind, die Schlagzähigkeit von Epoxidharze zu verbessern.

Überraschenderweise wurde nun gefunden, dass diese Aufgabe durch Epoxidgruppen-terminierte Polymere gemäss Anspruch 1 erfüllt werden kann. Diese Epoxidgruppen-terminierte Polymere sind Teil von Epoxidharzzusammensetzungen gemäss Anspruch, 8, insbesondere von hitzehärtenden Epoxidharzzusammensetzungen gemäss Anspruch 10, welche einen weiteren Aspekt der vorliegenden Erfindung darstellen. Insbesondere überraschend wurde gefunden, dass die Schlagzähigkeit gegenüber dem Stand der Technik zum Teil stark erhöht werden konnte. Es hat sich gezeigt, dass sogar Bruchenergien von bis über 20 J, sowohl bei Raumtemperatur als auch bei minus 20°C, erhalten werden können. Es zeigte sich weiterhin, dass mit diesen Polymeren Epoxidharzzusammensetzungen erhalten werden können, welche trotz der hohen Schlagzähigkeit exzellente mechanische Eigenschaften sowie hohe Glasübergangstemperaturen aufweisen. Als besonderes überraschend hat sich erwiesen, dass mit derartigen Epoxidharzzusammensetzungen bei tiefen Temperaturen (-20°C) beinahe gleich hohe Bruchenergien wie bei Raumtemperatur erhalten werden können.

Weitere Aspekte der Erfindung betreffen ein Verfahren zur Herstellung dieser Epoxidgruppen-terminierten Polymere gemäss Anspruch 7, die Verwendung dieser Epoxidgruppen-terminierten Polymere als Schlagzähigkeitsmodifikatoren gemäss Anspruch 13 oder die Verwendung dieser Epoxidharzzusammensetzungen als Klebstoff gemäss Anspruch 14.

Schliesslich bilden ausgehärtete Zusammensetzungen gemäss Anspruch 15 sowie verklebte Artikel gemäss Anspruch 16 weitere Aspekte der vorliegenden Erfindung.

Besonders bevorzugte Ausführungsformen sind Gegenstand der Unteransprüche.

### Wege zur Ausführung der Erfindung

Die vorliegende Erfindung betrifft in einem ersten Aspekt ein Epoxidgruppen-terminiertes Polymer der Formel (I).

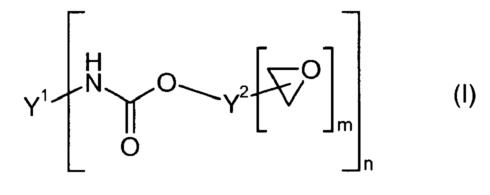

Hierbei steht Y¹ für einen n-wertigen Rest eines mit Isocyanatgruppen terminierten linearen oder verzweigten Polyurethanpolymeren **PU1** nach dem Entfernen der n endständigen Isocyanatgruppen. Zudem steht Y² für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen. Schliesslich steht m für einen Wert von 1, 2 oder 3 und n für einen Wert von 2 bis 8.

Das Polyurethanpolymer **PU1** wird aus mindestens einem Diisocyanat oder Triisocyanat und mindestens einem nicht-phenolischen Diol **Q₁** und mindestens einem Polymeren **Q₂** mit endständigen Hydroxylgruppen, Thiolgruppen, primären Aminogruppen oder sekundären Aminogruppen erhalten. Das nicht-phenolische Diol **Q₁** weist ein Molekulargewicht von 60 bis 400 g/mol und das Polymer **Q₂** ein Molekulargewicht von 600 bis 20'000 g/mol auf.

Mit "Poly" beginnende Substanznamen wie "Polyol", "Polyisocyanat", "Polyamin" oder "Polyphenol" bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Prepolymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" oder "Molgewicht" versteht man im vorliegenden Dokument stets das Molekulargewichtsmittel Mₙ.

Das Polyurethanpolymer **PU1** wird aus einem mindestens einem Diisocyanat oder Triisocyanat und mindestens einem nicht-phenolischen Diol **Q₁** mit einem Molekulargewicht von 60 bis 400 g/mol und mindestens einem Polymeren **Q₂** mit endständigen Hydroxylgruppen, Thiolgruppen, primären Aminogruppen oder sekundären Aminogruppen mit einem Molekulargewicht von 600 bis 20'000 g/mol erhalten.

Vorzugsweise weist das molare Verhältnis **Q₂** : **Q₁** einen Wert von 1 : 2 bis 1 : 0.01, bevorzugt einen Wert von 1:2 bis 1: 0.05, meist bevorzugt einen Wert von 1 : 2 bis 1 : 0.2, auf.

Als nicht-phenolische Diole **Q₁** sind insbesondere aliphatische, cycloaliphatische und araliphatischen Diole geeignet.

Als derartige nicht-phenolische Diole **Q₁** sind insbesondere geeignet
- aliphatische Diole, insbesondere
   - Alkylendiole, insbesondere Ethylenglycol, 1,2-Propandiol, 1,3-Propandiol, 2-Methyl-1,3-propandiol, Dimethylpropandiole, insbesondere 2,2-Dimethyl-1,3-propandiol (=Neopentylglycol), 1,2-Butandiol, 1,3-Butandiol, 1,4-Butandiol, 2-Buten-1,4-diol, 2,3-Butandiol, Methylbutan-diole, Dimethylbutandiole, 1,5-Pentandiol, 1,2-Pentandiol, 2,4-Pentandiol, Methylpentandiole, Dimethylpentandiole, insbesondere 2,4-Dimethyl-2,4-pentandiol, Trimethylpentandiole, 1,6-Hexandiol, 1,2-Hexandiol, 2,5-Hexandiol, Methylhexandiole, Dimethylhexandiole, insbesondere 2,5-Dimethyl-2,5-hexandiol, 1,7-Heptandiol, 2,6-Heptandiol, 1,8-Octandiol, 1,2-Octandiol oder 3,6-Octandiol;
   - Polyoxyalklyendiole, insbesondere Diethylenglycol, Dipropylenglycol, Dibutylenglycol, Triethylenglycol, Tripropylenglycol, Tributylenglycol, Tetraethylenglycol, Tetrapropylenglycol, Tetrabutylenglycol, Pentaethylenglycol, Pentapropylenglycol, Pentabutylenglycol, Hexaethylenglycol, Hexapropylenglycol, Heptaethylenglycol, Octaethylenglycol oder Polyoxyethylen/oxypropylendiole;
   - Alkylendiole enthaltend cycloaliphatische Teilstrukturen, insbesondere Cyclohexandimethanol, Tricyclodecandimethanol, Bis(hydroxymethyl)-tricyclo[5.2.1.0(2,6)]decan und 2,5(2,6)-Bis-(hydroxymethyl)-bicyclo[2.2.1 ]heptan;
- cycloaliphatische Diole, insbesondere Cyclohexandiol, Methylcyclohexandiol, Dimethylcyclohexandiol, Norbornandiol, hydriertes Bisphenol-A (Bis-(4-hydroxycyclohexyl)-methan), hydriertes Bisphenol-F (Bis-(4-hydroxycyclohexyl)-propan), Cycloheptandiol, Cyclooctandiol und Dicyclopentadienyldiol;
- araliphatischen Diole, insbesondere Xylylendiol, ethoxyliertes Bisphenol-A, propoxyliertes Bisphenol-A, ethoxyliertes Bisphenol-F, propoxyliertes Bisphenol-F.

Bevorzugt ist das nicht-phenolische Diol **Q₁** ein Diol, welches ausgewählt ist aus der Gruppe bestehend aus Ethylenglykol, Butandiol, Hexandiol, Cyclohexandimethanol, Tricyclodecandimethanol, 3(4),8(9)-Bis(hydroxymethyl)-tricyclo[5.2.1.0(2,6)]decan, Xylylendiol, ethoxyliertes Bisphenol-A und propoxyliertes Bisphenol-A.

Mehr bevorzugt ist das nicht-phenolische Diol **Q₁** ein Diol, welches ausgewählt ist aus der Gruppe bestehend aus 1,4-Butandiol, Hexandiol, Cyclohexandimethanol, Tricyclodecandimethanol, 3(4),8(9)-Bis(hydroxymethyl)-tricyclo[5.2.1.0(2,6)]decan, Xylylendiol, ethoxyliertes Bisphenol-A und propoxyliertes Bisphenol-A. Meist bevorzugt ist das nicht-phenolische Diol **Q₁** ein ethoxyliertes Bisphenol-A oder ein propoxyliertes Bisphenol-A.

Als Polymere **Q₂** mit endständigen Hydroxylgruppen, Thiolgruppen, primären Aminogruppen oder sekundären Aminogruppen mit einem Molekulargewicht von 600 bis 20'000 g/mol sind geeignet
a) Polyole, insbesondere
   - Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und -triole mit einem Molekulargewicht von 600 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
   - Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
   - Styrol-Acrylnitril gepfropfte Polyetherpolyole, wie sie beispielsweise von Elastogran unter dem Namen Lupranol® geliefert werden;
   - Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hycar® CTBN von Nanoresins AG, Deutschland) und Epoxiden oder Aminoalkoholen hergestellt werden können;
   - Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
   - Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
   - Polyole, wie sie durch Reduktion von dimerisierten Fettsäuren erhalten werden;
b) Polyamine, insbesondere
   - Aminogruppen terminierte Polyethylenether oder Polypropylenether, wie sie zum Beispiel unter dem Namen Jeffamine® von Huntsman vertrieben werden;
   - Aminogruppen terminierte Polybutylenether, Polybutadiene, Butadien/ Acrylonitril-Copolymere, insbesondere wie sie zum Beispiel die unter dem Namen Hycar® ATBN von Nanoresins AG, Deutschland vertrieben werden;
   - Aminogruppen terminierte synthetische Kautschuke;
c) Polythiole (auch als Polymercaptane bezeichnet), insbesondere Dimercaptane, wie
   - Polymercaptocetate von Polyolen, insbesondere Polymercaptocetate der oben genannten Polyole;
   - Dimercaptane der Formel (II). 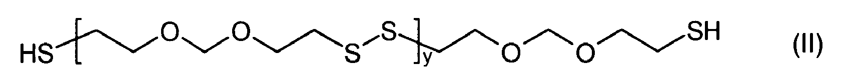
   Hierbei steht y für einen Wert von 1 bis 45, insbesondere von 5 bis 23. Die bevorzugten Molekulargewichte sind zwischen 800 und 7500 g/mol, insbesondere zwischen 1000 und 4000 g/mol. Derartige Polymercaptane sind kommerziell erhältlich unter der Thiokol® LP-Reihe von Toray Fine Chemicals Co.

Das Polymer **Q₂** mit endständigen Hydroxylgruppen, Thiolgruppen, primären Aminogruppen oder sekundären Aminogruppen ist vorzugsweise einerseits ein aliphatisches oder cycloaliphatisches oder araliphatisches Polyol, insbesondere ein Polyoxyalklylenpolyol, bevorzugt ein Polyoxyalklylendiol.

Das Polymer **Q₂** mit endständigen Hydroxylgruppen, Thiolgruppen, primären Aminogruppen oder sekundären Aminogruppen ist vorzugsweise andererseits ein Ethergruppen-haltiges aliphatisches Polyamin, insbesondere ein Polyoxyalkylen-Polyamine mit zwei oder drei primären Aminogruppen.

Als Diisocyanate für die Herstellung des Polyurethanpolymeren **PU1** geeignet sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylendiisocyanat (TMXDI) sowie deren Stellungsisomeren und Dimere. Bevorzugt sind HDI, IPDI, MDI oder TDI.

Als Triisocyanate für die Herstellung des Polyurethanpolymeren **PU1** geeignet sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Die Herstellung des mit Isocyanatgruppen terminierten Polyurethanpolymeren **PU1** kann in einer Ausführungsform aus einer Umsetzung des Diisocyanats oder Triisocyanats mit einer Mischung von mindestens einem nicht-phenolischen Diol **Q₁** und mindestens einem der Polymeren **Q₂** erfolgen.

In einer anderen, bevorzugten, Ausführungsform kann die Herstellung durch eine Umsetzung des Diisocyanats oder Triisocyanats mit einem Polymeren **Q₂** unter Bildung eines Isocyanatgruppen-aufweisenden Reaktionsproduktes **PU1',** gefolgt von einer Kettenverlängerung dieses Zwischenproduktes mit einem nicht-phenolischen Diol **Q₁**, erfolgen.

In einer weiteren Ausführungsform kann die Herstellung durch eine Umsetzung des Diisocyanats oder Triisocyanats mit einem nicht-phenolischen Diol **Q₁** unter Bildung eines Isocyanatgruppen-aufweisenden Reaktionsproduktes **PU1**", gefolgt von einer Kettenverlängerung dieses Zwischenproduktes mit einem Polymeren **Q₂**, erfolgen.

Das Epoxidgruppen-terminierte Polymer der Formel (I) lässt sich aus einem mit Isocyanatgruppen terminierten linearen oder verzweigten Polyurethanpolymeren **PU1** und einem aliphatischen, cycloaliphatischen, aromatischen oder araliphatischen Epoxid, welches eine primäre oder sekundäre Hydroxylgruppe enthält, herstellen.

Das aliphatische, cycloaliphatische, aromatische oder araliphatische Epoxid, welches eine primäre oder sekundäre Hydroxylgruppe enthält, in diesem Dokument auch als Monohydroxyl-Epoxidverbindung bezeichnet, weist die Struktur der Formel (III) auf.

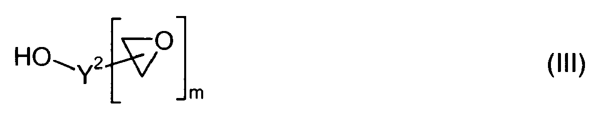

Die Monohydroxyl-Epoxidverbindung der Formel (III) weist 1, 2 oder 3 Epoxidgruppen auf. Die Hydroxylgruppe dieser Monohydroxyl-Epoxidverbindung (III) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IV), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IV), die bei der Reaktion von Bisphenol-F (R = H) oder des Gemisches von Bisphenol-A und Bisphenol-F mit Epichlorhydrin gebildet werden.

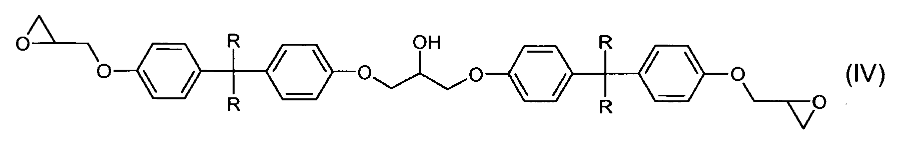

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest Y² ist insbesondere bevorzugt ein dreiwertiger Rest der Formel 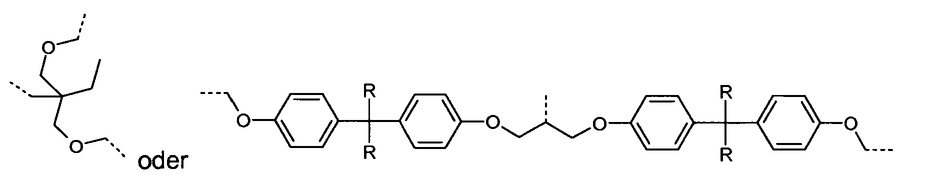 wobei R für Methyl oder H steht.

Die freie primäre oder sekundäre OH-Funktionalität der Monohydroxyl-Epoxidverbindung der Formel (III) lässt eine effiziente Umsetzung mit terminalen Isocyanatgruppen von Polymeren **PU1** zu, ohne dafür unverhältnismässige Überschüsse der Epoxidkomponente einsetzen zu müssen.

Die Reaktion zwischen der Monohydroxyl-Epoxidverbindung der Formel (III) und dem mit Isocyanatgruppen terminierten linearen oder verzweigten Polyurethanpolymeren **PU1** erfolgt in einer dem Fachmann an und für sich bekannten Art und Weise.

Das Epoxidgruppen-terminiertes Polymer der Formel (I) weist typischerweise einen elastischen Charakter auf und ist weiterhin vorteilhaft in Epoxid-Flüssigharzen löslich oder dispergierbar. Es ist breit anwendbar und kann beispielsweise als Epoxidharz oder Zusatz zu Epoxidharzzusammensetzungen verwendet werden.

Insbesondere wurde gefunden, dass das Epoxidgruppen-terminierte Polymer der Formel (I) in hervorragender Art und Weise als Schlagzähigkeitsmodifikator, das heisst als Mittel zur Verbesserung der Schlagzähigkeit, insbesondere von Epoxidharzen, verwendet werden kann.

In einem zweiten Aspekt betrifft die vorliegende Erfindung eine Epoxidharzzusammensetzung, welche mindestens ein Epoxidharz **A** mit durchschnittlich mehr als einer Epoxidgruppe pro Molekül sowie mindestens ein Epoxidgruppen-terminiertes Polymer der Formel (I), wie es vorgängig beschrieben wurde, umfasst.

Die Epoxidgruppe des Epoxidharzes **A** liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (V) auf

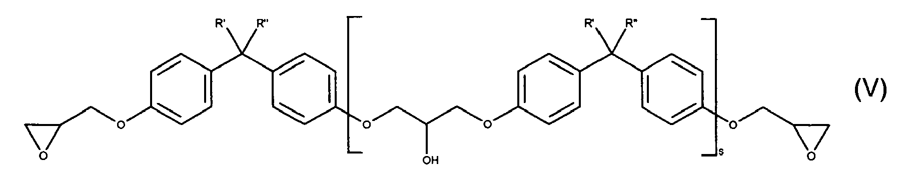

Hierbei stehen die Substituenten R' und R" unabhängig voneinander entweder für H oder CH₃. In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (V) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (VI) auf

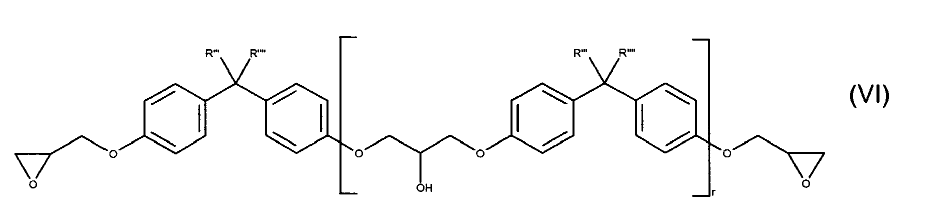

Hierbei stehen die Substituenten R"' und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Bevorzugt stellt das Epoxidharz **A** ein Epoxid-Flüssigharz der Formel (VI) dar. In einer noch mehr bevorzugten Ausführungsform enthält die hitzehärtende Epoxidharzzusammensetzung sowohl mindestens ein Epoxid-Flüssigharz der Formel (VI) als auch mindestens ein Epoxid-Festharz der Formel (V).

Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Der Anteil des Epoxidgruppen-terminierten Polymers der Formel (I) beträgt vorzugsweise 1 - 45 Gew.-%, insbesondere 3 - 30 Gew.-%, am Gewicht der Zusammensetzung.

Die Epoxidharzzusammensetzung kann raumtemperaturhärtend oder hitzehärtend sein.

Im Falle der raumtemperaturhärtenden Epoxidharzusammensetzungen erfolgt die Härtung durch ein Beimischen einer Härterkomponente, welche typischerweise ein Polyamin oder ein Polymercaptan umfasst.

Im Falle der hitzehärtenden Epoxidharzusammensetzungen erfolgt die Aushärtung bei erhöhter Temperatur infolge der Gegenwart eines wärmeaktivierbaren Härters.

Bevorzugt ist die Epoxidharzzusammensetzung eine hitzehärtende Epoxidharzzusammensetzung. Somit enthält in einer bevorzugten Ausführungsform die Epoxidharzzusammensetzung weiterhin mindestens einen Härter **B** für Epoxidharze, welcher durch erhöhte Temperatur aktiviert wird, und hitzehärtend ist. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid und Amin-Komplexe eingesetzt werden.

Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.

Besonders bevorzugt als Härter **B** ist Dicyandiamid.

Vorteilhaft beträgt der Gesamtanteil des Härters **B** 0.5 - 12 Gewichts-%, vorzugsweise 1 - 8 Gewichts-%, bezogen auf das Gewicht der gesamten Zusammensetzung.

Die Epoxidharzzusammensetzung, insbesondere die hitzehärtende Epoxidharzzusammensetzung, kann weiterhin ein Thixotropiermittel C auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylendiisocyanat (MDI) mit Butylamin erwiesen.

Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.

Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanpolymer PU2, insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels **C** 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2 / 98 bis 50 / 50, insbesondere 5 / 95 - 25 /75.

Die Epoxidharzzusammensetzung, insbesondere die hitzehärtende Epoxidharzzusammensetzung, enthält vorzugsweise weiterhin einen Flüssigkautschuk D, welcher vorzugsweise ein carboxyl- oder epoxidterminiertes Polymer ist.

In einer Ausführungsform ist dieser Flüssigkautschuk **D** ein carboxyl- oder epoxidterminiertes Acrylnitrii/Butadien-Copolymer oder ein Derivat davon. Derartige Flüssigkautschuke sind beispielsweise unter dem unter dem Namen Hycar® CTBN und CTBNX und ETBN von Nanoresins AG, Deutschland kommerziell erhältlich. Als Derivate sind insbesondere Epoxidgruppen aufweisende Elastomer-modifizierte Polymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer anderen Ausführungsform ist dieser Flüssigkautschuk **D** ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

In einer anderen Ausführungsform ist dieser Flüssigkautschuk **D** ein Copolymer, welches mit flüssigen Epoxidharzen vollständig mischbar ist und sich erst beim Aushärten der Epoxidharzmatrix zu Mikrotröpfchen entmischt. Derartige Copolymere können mit Epoxidharzen reaktiv oder nicht reaktiv sein. insbesondere handelt sich bei diesen Copolymeren um amphiphile Blockcopolymere. Als derartige Copolymere sind insbesondere Di- und Triblockcopolymere geeignet. Meist bevorzugt als derartige Copolymere sind flüssige Copolymere aus Ethylenoxid sowie mindestens einem weiteren Alkylenoxid, bevorzugt aus der Gruppe bestehend aus Propylenoxid, Butylenoxid, Hexylenoxid und Dodecylenoxid. Geeignete flüssige Copolymere sind solche, wie sie unter der Produktelinie Fortegra™ vom Dow Chemical kommerziell erhältlich sind.

Besonders geeignete Flüssigkautschuke **D** sind jene, wie sie jene wie sie in den folgenden Artikel bzw. Patentschriften offenbart sind: EP 0 308 664 A1, insbesondere Formel (I), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylat-terminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11 bis Zeile 20; EP 1 728 825 A1, insbesondere Formel (I), besonders Seite 3, Zeile 21 bis Seite 4 bis Zeile 47; WO 2006/052726 A1, insbesondere das als b) bezeichnete ambiphilic block copolymer, besonders Seite 6, Zeile 17 bis Seite 9, Zeile 10; WO 2006/052729 A1, insbesondere das als b) bezeichnete ambiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348*,* insbesondere die ambiphilen Blockcopolymere, besonders Seite 3339, 2. Spalte bis 3341 2.Spalte; WO 2004/055092 A1, insbesondere Formel (I), besonders Seite 7, Zeile 28 bis Seite 13 bis Zeile 15;. WO 2005/007720 A1, insbesondere Formel (I), besonders Seite 8, Zeile 1 bis Seite 17 bis Zeile 10; WO 2007/020266 A1, insbesondere Formel (I), besonders Seite 3, Zeile 1 bis Seite 11 bis Zeile 6, sowie DE-A-2 123 033.

Es ist dem Fachmann klar, dass natürlich auch Mischungen von Flüssigkautschuken verwendet werden können, insbesondere Mischungen von carboxyl- oder epoxidterminierten Acrylnitril/Butadien-Copolymeren oder von Derivaten davon.

Der Flüssigkautschuk **D** wird vorteilhaft in einer Menge von 1 - 35 Gew.-%, insbesondere 1 - 25 Gew.-%, bezogen auf das Gewicht der Zusammensetzung, eingesetzt.

Die Epoxidharzzusammensetzung, insbesondere die hitzehärtende Epoxidharzzusammensetzung, enthält vorzugsweise weiterhin einen festen Zähigkeitsverbesserer **E.** Unter einem "Zähigkeitsverbesserer" wird hierbei und im Folgenden ein Zusatz zu einer Epoxidharzmatrix verstanden, der bereits bei geringen Zuschlägen von 0.1 - 15 Gew.-%, insbesondere von 0.5 - 8 Gew.-%, eine deutliche Zunahme der Zähigkeit bewirkt und somit in der Lage ist, höherer Biege-, Zug-, Schlag- oder Stossbeanspruchung aufzunehmen, bevor die Matrix einreisst oder bricht.

Der feste Zähigkeitsverbesserer **E** ist in einer Ausführungsform ein organisches lonen-getauschtes Schichtmineral **E1**.

Das Ionen-getauschte Schichtmineral **E1** kann entweder ein Kationen-getauschtes Schichtmineral **E1c** oder ein Anionen-getauschtes Schichtmineral **E1a** sein.

Das Kationen-getauschte Schichtmineral **E1c** wird hierbei erhalten aus einem Schichtmineral **E1'**, bei welchem zumindest ein Teil der Kationen durch organische Kationen ausgetauscht worden sind. Beispiele für derartige Kationen-getauschte Schichtmineralien **E1c** sind insbesondere diejenigen, welche in US 5,707,439 oder in US 6,197,849 erwähnt sind. Ebenso ist dort das Verfahren zur Herstellung dieser Kationen-getauschten Schichtminerale **E1c** beschrieben. Bevorzugt als Schichtmineral **E1'** ist ein Schichtsilikat. Insbesondere bevorzugt handelt es sich beim Schichtmineral **E1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **E1'** wie Kaolinit oder ein Montmorillonit oder ein Hectorit oder ein Illit gezeigt.

Zumindest ein Teil der Kationen des Schichtminerals **E1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazabicyclo[2.2.2]octan (DABCO) und 1-Azabicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.

Bevorzugte Kationen-getauschte Schichtminerale **E1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) erhältlich.

Das Anionen-getauschte Schichtmineral **E1a** wird hierbei erhalten aus einem Schichtmineral **E1",** bei welchem zumindest ein Teil der Anionen durch organische Anionen ausgetauscht worden sind. Ein Beispiel für ein derartig Anionen-getauschtes Schichtmineral **E1a** ist ein Hydrotalcit **E1",** bei dem zumindest ein Teil der Carbonat-Anionen der Zwischenschichten durch organische Anionen ausgetauscht wurden. Ein weiteres Beispiel sind funktionalisierte Alumoxane wie z. B. in US 6,322,890 beschrieben.

Es ist durchaus auch möglich, dass die Zusammensetzung gleichzeitig ein Kationen-getauschtes Schichtmineral **E1c** und ein Anionen-getauschtes Schichtmineral **E1a** enthält.

Der feste Zähigkeitsverbesserer ist in einer anderen Ausführungsform ein Blockcopolymer **E2**. Das Blockcopolymer **E2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere E2 sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Der feste Zähigkeitsverbesserer **E** ist in einer weiteren Ausführungsform ein Core-Shell Polymer E3. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur^{™} von Nanoresins AG, Deutschland, angeboten.

Der feste Zähigkeitsverbesserer **E** ist in einer noch weiteren Ausführungsform ein festes Umsetzungsprodukt **E4** eines carboxylierten festen Nitrilkautschuks mit überschüssigem Epoxidharz.

Als fester Zähigkeitsverbesserer **E** sind Core-Shell Polymere bevorzugt.

Der feste Zähigkeitsverbesserers **E** ist vorzugsweise in einer Menge von 0.1 - 15 Gew.-%, insbesondere von 0.5 - 8 Gew.-%, bezogen auf das Gewicht der Zusammensetzung vorhanden.

Die Epoxidharzzusammensetzung, insbesondere die hitzehärtende Epoxidharzzusammensetzung, enthält vorteilhaft zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Illit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

Weiterhin kann die Epoxidharzzusammensetzung, insbesondere die hitzehärtende Epoxidharzzusammensetzung, zusätzlich mindestens einen Epoxidgruppen-tragenden Reaktivverdünner **G** enthalten. Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert.*-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.5 - 20 Gewichts-%, vorzugsweise 1 - 8 Gewichts-%, bezogen auf das Gewicht der gesamten Zusammensetzung.

Weiterhin kann die Epoxidharzzusammensetzung, insbesondere die hitzehärtende Epoxidharzzusammensetzung, ein Treibmittel enthalten. Das Treibmittel kann ein physikalisches oder chemisches Treibmittel sein, wie es beispielsweise unter dem Handelsnamen Expancel™ der Firma Akzo Nobel oder Celogen™ der Firma Chemtura erhältlich ist. Der Anteil des Treibmittels beträgt vorteilhaft 0.1 - 3 Gew.-%, bezogen auf das Gewicht der Zusammensetzung.

Schliesslich kann die Epoxidharzzusammensetzung, insbesondere die hitzehärtende Epoxidharzzusammensetzung, noch weitere Bestandteile, insbesondere Katalysatoren, Hitze- und/oder Lichtstabilisatoren, Thixotropiermittel, Weichmacher, Lösungsmittel, mineralische oder organische Füllstoffe, Treibmittel, Farbstoffe und Pigmente, umfassen.

Es hat sich gezeigt, dass sich die beschriebenen Epoxidharzzusammensetzungen, insbesondere die hitzehärtenden Epoxidharzzusammensetzungen, sich besonders gut als Klebstoffe eignen.

Die hitzehärtenden Epoxidharzzusammensetzungen eignen sich besonders gut als einkomponentige Klebstoffe. Somit betrifft die Erfindung in einem weiteren Aspekt eine Verwendung der vorgängig beschriebenen hitzehärtenden Epoxidharzzusammensetzung als einkomponentigen hitzehärtenden Klebstoff. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -20°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazinkbeschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Crashfestigkeit sowohl hoher als auch tiefer Einsatztemperatur zu erreichen. Zusätzlich hierzu weist die Zusammensetzung hohe mechanische Werte auf. Insbesondere hat sich gezeigt, dass Glasübergangstemperaturen von über 80°C, insbesondere von 90°C oder höher, zuweilen höher als 100°C, erreicht werden können, was insbesondere wichtig ist für Anwendungen mit hohen Arbeitstemperaturen.

Ein weiterer Aspekt der Erfindung betrifft somit ein Verfahren zum Verkleben von hitzestabilen Materialien, bei welchem diese Materialien mit einer vorgängig beschriebenen Epoxidharzzusammensetzung kontaktiert werden und welches einen oder mehrere Schritte des Erhitzens der Zusammensetzung auf eine Temperatur von 100 - 220 °C, vorzugsweise 120 - 200°C umfasst. Ein derartiger Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Aus einem derartigen Verfahren zum Verkleben von hitzestabilen Materialien resultiert ein verklebter Artikel, was einen weiteren Aspekt der vorliegenden Erfindung darstellt. Ein derartiger Artikel ist vorzugsweise ein Fahrzeug oder ein Anbauteil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien können bei Temperaturen zwischen typischerweise 120°C und -40°C, vorzugsweise zwischen 100°C und -40°C, insbesondere zwischen 80°C und -40°C eingesetzt werden.

Es lassen sich Zusammensetzungen formulieren, welche typischerweise Bruchenergien, gemessen nach ISO 11343, von mehr als 14.0 J bei 23°C und mehr als 13.0 J bei -20°C aufweisen. Es lassen sich zuweilen Zusammensetzungen formulieren, welche Bruchenergien von mehr als 17.0 J bei 23°C und von mehr als 17.0 J bei -20°C aufweisen. Besonders vorteilhafte Zusammensetzungen weisen gar Bruchenergien von mehr als 20.0 J bei 23°C und von mehr als 19.5 J bei -20°C auf.

Besonders überraschend zeigte sich, dass insbesondere das Niveau der Tieftemperaturschlagzähigkeit erstaunlich hoch ist. So lassen sich Zusammensetzungen erreichen, welche bei -20°C im Wesentlichen gleiche Bruchenergien aufweisen als bei Raumtemperatur. Es konnten zuweilen sogar Fälle beobachtet werden, bei denen die Bruchenergie bei -20°C höher sind als bei Raumtemperatur. Dies ist natürlich vor allem für Anwendungen bei tiefen Temperaturen, typischerweise von unter 0°C, von grossem Interesse.

Eine besonders bevorzugte Anwendung der erfindungsgemässen hitzehärtenden Epoxidharzzusammensetzung ist die Anwendung als hitzehärtender Rohbauklebstoff im Fahrzeugbau.

### Beispiele

Im Folgenden sollen einige Beispiele aufgezeigt werden, welche die Erfindung weiter veranschaulichen, den Umfang der Erfindung aber in keiner Weise beschränken sollen. Die in den Beispielen verwendeten Rohstoffe sind in Tabelle 1 aufgelistet.

**Tabelle1. Eingesetzte Rohstoffe.**

| Verwendete Rohstoffe | Lieferant |
|---|---|
| D.E.R. 330 (Bisphenol-A-diglycidylether = *"DGEBA"*) | Dow |
| Araldite®GT7071 ("Typ-1,5" Festharz)(EP-Equivalentgewicht 475-550g/eq) | Huntsman |
| Dicyandiamid | Degussa |
| 1,2-Ethylenglycol | Sigma-Aldrich |
| 1,4-Butandiol | Sigma-Aldrich |
| Neopentylglykol | Sigma-Aldrich |
| 1,6-Hexandiol | Sigma-Aldrich |
| Tricyclodecandimethanol (TCD-Alkohol, *"TCD"*) | Sigma-Aldrich |
| 2,2-Bis[4-(2-hydroxyethoxy)phenyl]propane (*Dianol 220*) | AKZO |
| PolyTHF® 2000 | BASF |
| Bisphenol-A | Sigma-Aldrich |
| Aerosil® R 202 (*"R202"*) | Degussa |
| 2,2'-Diallyl-bisphenol-A (*"DABPA"*) | Sigma-Aldrich |

### Beispielhafte Herstellung eines monohydroxylhaltigen Epoxides TMPDGE

Trimethylolpropanglycidylether wurde gemäss dem Verfahren in Patent US 5,668,227, Beispiel 1, aus Trimethylolpropan und Epichlorhydrin mit Tetramethylammoniumchlorid und Natronlauge hergestellt. Man erhält ein gelbliches Produkt mit einer Epoxidzahl von 7.5 eq/kg und einem Hydroxylgruppengehalt von 1.8 eq/kg. Aus dem HPLC-MS Spektrum kann geschlossen werden, dass im Wesentlichen ein Gemisch von Trimethylolpropandiglycidylether und Trimethylolpropantriglycidylether vorliegt. Dieses Produkt wurde im Folgenden als ***TMPDGE*** eingesetzt.

### Monohydroxylhaltiges Epoxid: D- DGEBA

1,3-bis(4-(2-(4-(oxiran-2-ylmethoxy)phenyl)propan-2-yl)phenoxy)propan-2-ol) wurde aus technischem Bisphenol-A-diglycidylether Araldite® GY 250, Hersteller Huntsman) gewonnen, in welchem es ca. zu 15 Gew.-% vorhanden ist. Es kann durch destillatives Entfernen von Bisphenol-A-diglycidylether aufkonzentriert werden. In einem Dünnfilmverdampfer (Hersteller: Fa llmag) wird bei 180 °C Heizmanteltemperatur im Ölpumpenvakuum technischer Bisphenol-A-diglycidylether (Epoxyequivalentgewicht (EEW) = 195 g/Epoxidequivalent, bestimmt durch Titration) mit einer Membranpumpe mit 200 ml/h dosiert. Dabei destilliert reiner Bisphenol-A-diglycidylether ab, der bei Raumtemperatur kristallisiert. Der verbleibende Sumpf weist ein EEW = 207.1 g/Epoxidequivalent und eine OH-Zahl 49.4 mg KOH/g auf. Mit Tetrahydrofuran (THF) als Lösungsmittel zeigt das GPC Diagramm ein Flächenverhältnis der Peaks von "DGEBA-Dimer" und monomeres *DGEBA* von 40:60. Dieses Produkt wurde im Folgenden als ***D-DGEBA*** eingesetzt.

### Beispielhafte Herstellung eines Epoxidgruppen-terminierten Polyurethanpolymers der Formel (I):Beispiel 1

167.5 g PolyTHF® 2000 (OH-Zahl 51.6 mg KOH/g) und 15.40 g 1,4-Butandiol wurden 30 Minuten unter Vakuum bei 105°C getrocknet. Nachdem die Temperatur auf 90°C reduziert worden war, wurden 74.4 g IPDI und 0.05 g Dibutylzinndilaurat zugegeben. Die Reaktion wurde unter Vakuum bei 90°C bis zur Konstanz des NCO-Gehaltes bei 2.5% nach 2.5 h geführt (berechneter NCO-Gehalt: 2.61%). Anschliessend wurden zu diesem Polyurethanpolymer 85.2 g des oben beschriebenen ***TMPDGE*** zugegeben und die Reaktion wurde bei 90°C unter Vakuum weitergeführt, bis kein NCO-Gehalt mehr messbar war.

Die Beispiele ***2, 3, 4, 5, 6*** und ***7,*** sowie die Vergleichsbeispiele ***Ref.1*** und ***Ref.2*** wurden entsprechend dem Beispiel ***1*** hergestellt mit den in Tabelle 2 angegebenen Molverhältnissen. In allen Beispielen der Tabelle 2 wurde die Menge an Dibutylzinndilaurat so gewählt, dass sie 0.015 Gew.-% bezogen auf die Gesamtzusammensetzung betrug.

So entsprechen die Beispiele ***2, 3,*** bzw. ***4,*** dem Bespiel ***1*** mit dem Unterschied, dass 1,4-Butandiol mit einer equivalenten Menge von Ethylenglycol, Neopentylglycol, bzw. 1,6-Hexandiol ersetzt wurden.

**Tabelle 2. Herstellung von Epoxidgruppen-terminierten Polyurethanpolymeren: Eingesetzte Reaktanden und deren Molverhältnisse.**

| | **Ref.1** | **Ref.2** | **1** | **2** | **3** | **4** | **5** | **6** | **7** |
|---|---|---|---|---|---|---|---|---|---|
| PolyTHF® 2000 | 1 | 1 | 1 | 1 | 1 | 1 | 1 | 1 | 1 |
| Bisphenol-A | 2 | | | | | | | | |
| *DABPA* | | 1.35 | | | | | | | |
| 1,4-Butandiol | | | 2 | | | | | | |
| Ethylenglycol | | | | 2 | | | | | |
| Neopentylglycol | | | | | 2 | | | | |
| 1,6-Hexandiol | | | | | | 2 | | | |
| *TCD* | | | | | | | 0.5 | | |
| *Dianol 220* | | | | | | | | 0.5 | 0.25 |
| IPDI | 4 | 3 | 4 | 4 | 4 | 4 | 2.5 | 1.95 | 1.63 |
| *TMPDGE* | 1 | 0.7 | 1 | 1 | 1 | 1 | 1 | 0.22 | 0.20 |
| *D-BADGE* | | | | | | | | 0.22 | 0.20 |

### Beispielhafte Zusammensetzungen

Es wurden die Klebstoffzusammensetzungen ***Z1, Z2, Z3 Z4, Z5, Z5, Z6, Z7*** und die Vergleichszusammensetzungen ***ZRef1*** und ***ZRef2*** gemäss Tabelle 3 wie folgt hergestellt:

In einem Planetenmischer werden alle Komponenten ausser Dicyandiamid vorgelegt und bei 90 - 100°C im Vakuum eine Stunde gerührt, dann wird Dicyandiamid zugeben und nach weiteren 10 Minuten Rühren in Kartuschen abgefüllt.

**Tabelle 3. Zusammensetzungen enthaltend Epoxidgruppen-terminierten Polyurethanpolymere. Alle Angaben sind in Gewichts-%.**

| | ***ZRef1*** | ***ZRef2*** | ***Z1*** | ***Z2*** | ***Z3*** | ***Z4*** | ***Z5*** | ***Z6*** | ***Z7*** |
|---|---|---|---|---|---|---|---|---|---|
| Araldite® GT 7071 | 25.0 | 25.0 | 25.0 | 25.0 | 25.0 | 25.0 | 25.0 | 25.0 | 25.0 |
| *DGEBA* | 12.5 | 12.5 | 12.5 | 12.5 | 12.5 | 12.5 | 12.5 | 12.5 | 12.5 |
| ***Ref.1*** | 38.0 | | | | | | | | |
| ***Ref.2*** | | 38.0 | | | | | | | |
| ***1*** | | | 38.0 | | | | | | |
| ***2*** | | | | 38.0 | | | | | |
| ***3*** | | | | | 38.0 | | | | |
| ***4*** | | | | | | 38.0 | | | |
| ***5*** | | | | | | | 38.0 | | |
| ***6*** | | | | | | | | 38.0 | |
| ***7*** | | | | | | | | | 38.0 |
| Dicyandiamid | 2.5 | 2.5 | 2.5 | 2.5 | 2.5 | 2.5 | 2.5 | 2.5 | 2.5 |
| *R202* | 4.0 | 4.0 | 4.0 | 4.0 | 4.0 | 4.0 | 4.0 | 4.0 | 4.0 |
| Wollastonite | 18.0 | 18.0 | 18.0 | 18.0 | 18.0 | 18.0 | 18.0 | 18.0 | 18.0 |

### Prüfmethoden:

### Zugscherfestigkeit (ZSF) (DIN EN 1465)

Die Probekörper wurden aus den in beschriebenen Zusammensetzungen und mit elektrolytisch verzinktem DC04 Stahl (eloZn) mit dem Mass 100 x 25 x 1.5 mm hergestellt, dabei betrug die Klebfläche 25 x 10 mm bei einer Schichtdicke von 0.3 mm. Gehärtet wurde 30 Min. bei 180°C. Die Zuggeschwindigkeit betrug 10 mm/min.

### Zugfestigkeit (ZF) / Bruchdehnung (BD) / E-Modul (DIN EN ISO 527)

Eine Probe der Zusammensetzung wurde zwischen zwei Teflonpapieren auf eine Schichtdicke von 2 mm verpresst. Anschliessend wurde die Zusammensetzung während 30 Minuten bei 180°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima mit einer Zuggeschwindigkeit von 2 mm/min gemessen.

Die Zugfestigkeit ("*ZF*"), Bruchdehnung ("*BD*") und E-Modul (0.5-1.0%) ("*EM_{0.5-1.0}*") wurde gemäss DIN EN ISO 527 bestimmt.

### Schlagschälarbeit (ISO 11343)

Die Probekörper wurden aus den beschriebenen Zusammensetzungen und mit elektrolytisch verzinktem DC04 Stahl (eloZn) mit dem Mass 90 x 20 x 0.8 mm hergestellt, dabei betrug die Klebfläche 20 x 30 mm bei einer Schichtdicke von 0.3mm. Gehärtet wurde 30 Min. bei 180°C. Die Messung der Schlagschälarbeit erfolgte jeweils bei Raumtemperatur und bei minus 20°C. Die Schlaggeschwindigkeit betrug 2 m/s. Als Bruchenergie (*BE*) in Joule wird die Fläche unter der Messkurve (von 25% bis 90%, gemäss ISO 11343) angegeben.

### Glasübergangstemperatur (T_{g})

Die Glasübergangstemperatur wurde mittels DSC bestimmt. Es wurde hierfür ein Gerät Mettler DSC822^{e} verwendet. 10 - 20 mg der Zusammensetzungen wurden jeweils in einen Aluminiumtiegel eingewogen. Nachdem die Probe im DSC während 30 Min. bei 175°C gehärtet worden war, wurde die Probe auf minus 20°C abgekühlt und anschliessend mit einer Heizrate von 10°C/min bis 150°C aufgeheizt. Die Glasübergangstemperatur wurde mit Hilfe der DSC-Software aus der gemessenen DSC-Kurve bestimmt.

Die Ergebnisse dieser Prüfungen sind in Tabelle 4 zusammengestellt.

**Tabelle 4. Prüfergebnisse der Zusammensetzungen. ¹ n.b.= nicht bestimmt.**

| | ***ZRef1*** | ***ZRef2*** | ***Z1*** | ***Z2*** | ***Z3*** | ***Z4*** | ***Z5*** | ***Z6*** | ***Z7*** |
|---|---|---|---|---|---|---|---|---|---|
| *EM_{0.5-1.0}*[MPa] | 1483 | 1199 | 1323 | 1215 | 1187 | 940 | 1012 | 599 | 352 |
| *BD* [%] | 9.3 | 13.8 | 10.8 | 14.6 | 12.6 | 24.9 | 25.7 | 28.8 | 32.0 |
| *ZF* [MPa] | 35.9 | 27.7 | 31.4 | 30.1 | 27.1 | 25.6 | 25.7 | 19.0 | 15.5 |
| *ZSF* [MPa] | 22.5 | 22.3 | 23.3 | 23.7 | 23.1 | 23.1 | 21.9 | 19.4 | 17.6 |
| *BE* bei 23°C [J] | 14.1 | 13.8 | 17.9 | 15.4 | 15.0 | 17.2 | 17.9 | 20.4 | 21.6 |
| *BE* bei -20°C [J] | 11.4 | 10.8 | 17.4 | 14.5 | 13.3 | 19.5 | 17.8 | 19.8 | 20.1 |
| *T_{G}* [°C] | 81.8 | 78.2 | 92.7 | 82.7 | 87.3 | 105.6 | 94.2 | n.b.¹ | n.b.¹ |

## Patentansprüche

1. Epoxidgruppen-terminiertes Polymer der Formel (I) 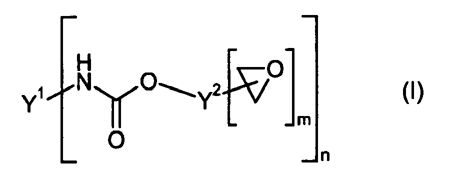 wobei
Y¹ für einen n-wertigen Rest eines mit Isocyanatgruppen terminierten linearen oder verzweigten Polyurethanpolymeren **PU1** nach dem Entfernen der n endständigen Isocyanatgruppen steht;
Y² für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
m = 1, 2 oder 3 ist;
n = 2 bis 8 ist;
und wobei das Polyurethanpolymer **PU1** aus mindestens einem Diisocyanat oder Triisocyanat und mindestens einem nicht-phenolischen Diol **Q₁** und mindestens einem Polymeren **Q₂** mit endständigen Hydroxylgruppen, Thiolgruppen, primären Aminogruppen oder sekundären Aminogruppen erhalten wird, und
wobei das nicht-phenolische Diol **Q₁** ein Molekulargewicht von 60 bis 400 g/mol und das Polymer **Q₂** ein Molekulargewicht von 600 bis 20'000 g/mol aufweist.

2. Epoxidgruppen-terminiertes Polymer gemäss Anspruch 1, **dadurch gekennzeichnet, dass** das nicht-phenolische Diol **Q₁** ein aliphatisches oder cycloaliphatisches oder araliphatisches Diol ist.

3. Epoxidgruppen-terminiertes Polymer gemäss Anspruch 2, **dadurch gekennzeichnet, dass** das nicht-phenolische Diol **Q₁** ein Diol ist, welches ausgewählt ist aus der Gruppe bestehend aus 1,4-Butandiol, Hexandiol, Cyclohexandimethanol, Tricyclodecandimethanol, 3(4),8(9)-Bis(hydroxymethyl)-tricyclo[5.2.1.0(2,6)]decan, Xylylendiol, ethoxyliertes Bisphenol-A und propoxyliertes Bisphenol-A.

4. Epoxidgruppen-terminiertes Polymer gemäss Anspruch 1 oder 2 oder 3, **dadurch gekennzeichnet, dass** das Polymer **Q₂** ein aliphatisches oder cycloaliphatisches oder araliphatisches Polyol ist.

5. Epoxidgruppen-terminiertes Polymer gemäss Anspruch 1 oder 2 oder 3, **dadurch gekennzeichnet, dass** das Polymer **Q₂** ein Ethergruppen-haltiges aliphatisches Polyamin ist.

6. Epoxidgruppen-terminiertes Polymer gemäss einem der vorhergehenden Ansprüche, **dadurch gekennzeichnet, dass** das molare Verhältnis **Q₂** : **Q₁** einen Wert von 1 : 2 bis 1 : 0.01 aufweist.

7. Verfahren zur Herstellung eines Epoxidgruppen-terminierten Polymers gemäss einem der Ansprüche 1 bis 6 durch die Reaktion eines mit Isocyanatgruppen terminierten Polyurethan polymeren **PU1** mit einem eine primäre oder sekundäre Hydroxylgruppe enthaltenden aliphatischen, cycloaliphatischen, aromatischen oder araliphatischen Epoxid.

8. Epoxidharzzusammensetzung enthaltend
- mindestens ein Epoxidharz **A** mit durchschnittlich mehr als einer Epoxidgruppe pro Molekül;
- mindestens ein Epoxidgruppen-terminiertes Polymer der Formel (I) gemäss einem der Ansprüche 1 - 6.

9. Epoxidharzzusammensetzung gemäss Anspruch 8, **dadurch gekennzeichnet, dass** die Epoxidharzzusammensetzung weiterhin mindestens einen Härter **B** für Epoxidharze, welcher durch erhöhte Temperatur aktiviert wird, enthält und dass die Epoxidharzzusammensetzung hitzehärtend ist.

10. Hitzehärtende Epoxidharzzusammensetzung gemäss Anspruch 9, **dadurch gekennzeichnet, dass** die Zusammensetzung weiterhin einen Flüssigkautschuk **D** enthält.

11. Hitzehärtende Epoxidharzzusammensetzung gemäss einem der Ansprüche 9 bis 10, **dadurch gekennzeichnet, dass** die Epoxidharzzusammensetzung mindestens ein Treibmittel enthält.

12. Hitzehärtende Epoxidharzzusammensetzung gemäss einem der Ansprüche 9 bis 11, **dadurch gekennzeichnet, dass** der Anteil des Epoxidgruppen-terminierten Polymers der Formel (I) 1- 45 Gew.-% am Gewicht der Zusammensetzung beträgt.

13. Verwendung des Epoxidgruppen-terminierten Polymers der Formel (I) gemäss einem der Ansprüche 1 bis 6 als Schlagzähigkeitsmodifikator.

14. Verwendung einer Epoxidharzzusammensetzung gemäss einem der Ansprüche 8 bis 12 als Klebstoff.

15. Ausgehärtete Zusammensetzung, welche erhalten wird durch ein Erhitzen einer hitzehärtenden Epoxidharzzusammensetzung gemäss einem der Ansprüche 8 bis 11 auf eine Temperatur von 100 - 220 °C.

16. Verklebter Artikel, erhalten durch ein Verklebungsverfahren umfassend die Schritte
i) Kontaktieren eines hitzestabilen Materials, insbesondere eines Metalls mit einer hitzehärtenden Epoxidharzzusammensetzung gemäss einem der Ansprüche 8 bis 11
ii) Erhitzen der Zusammensetzung auf eine Temperatur von 100 - 220 °C.

## Claims

1. An epoxide group-terminated polymer of the formula (I) 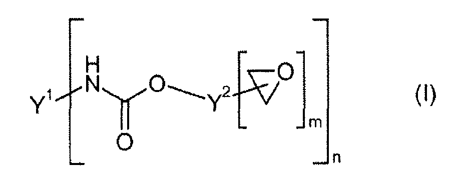 where
Y¹ is an n-valent radical of a linear or branched polyurethane polymer terminated with isocyanate groups, **PU1**, after the removal of the n terminal isocyanate groups;
Y² is a radical of an aliphatic, cycloaliphatic, aromatic or araliphatic epoxide containing a primary or secondary hydroxyl group, after the removal of the hydroxide groups and epoxide groups;
m is 1, 2 or 3;
n is 2 to 8;
and where the polyurethane polymer **PU1** is obtained from at least one diisocyanate or triisocyanate and from at least one nonphenolic diol **Q₁** and at least one polymer **Q₂** having terminal hydroxyl groups, thiol groups, primary amino groups or secondary amino groups, and
where the nonphenolic diol **Q₁** has a molecular weight of 60 to 400 g/mol and the polymer **Q₂** has a molecular weight of 600 to 20 000 g/mol.

2. The epoxide group-terminated polymer of claim 1, **characterized in that** the nonphenolic diol **Q₁** is an aliphatic or cycloaliphatic or araliphatic diol.

3. The epoxide group-terminated polymer of claim 2, **characterized in that** the nonphenolic diol **Q₁** is a diol selected from the group consisting of 1,4-butanediol, hexanediol, cyclohexanedimethanol, tricyclodecanedimethanol, 3(4),8(9)-bis(hydroxylmethyl)tricyclo[5.2.1.0(2,6)]decane, xylylenediol, ethoxylated bisphenol A, and propoxylated bisphenol A.

4. The epoxide group-terminated polymer of claim 1 or 2 or 3, **characterized in that** the polymer **Q₂** is an aliphatic or cycloaliphatic or araliphatic polyol.

5. The epoxide group-terminated polymer of claim 1 or 2 or 3, **characterized in that** the polymer **Q₂** is an aliphatic polyamine containing ether groups.

6. The epoxide group-terminated polymer of any of the preceding claims, **characterized in that** the molar ratio **Q₂:Q₁** has a value of 1:2 to 1:0.01.

7. A process for preparing an epoxide group-terminated polymer of any of claims 1 to 6 by the reaction of an isocyanate group-terminated polyurethane polymer **PU1** with an aliphatic, cycloaliphatic, aromatic or araliphatic epoxide containing a primary or secondary hydroxyl group.

8. An epoxy resin composition comprising
- at least one epoxy resin **A** having on average more than one epoxide group per molecule;
- at least one epoxide group-terminated polymer of the formula (I) of any of claims 1-6.

9. The epoxy resin composition of claim 8, **characterized in that** the epoxy resin composition further comprises at least one hardener **B** for epoxy resins which is activated by elevated temperature, and **in that** the epoxy resin composition is heat curing.

10. The heat-curing epoxy resin composition of claim 9, **characterized in that** the composition further comprises a liquid rubber **D.**

11. The heat-curing epoxy resin composition of any of claims 9 to 10, **characterized in that** the epoxy resin composition comprises at least one blowing agent.

12. The heat-curing epoxy resin composition of any of claims 9 to 11, **characterized in that** the fraction of the epoxide group-terminated polymer of the formula (I) is 1%-45% by weight, based on the weight of the composition.

13. The use of the epoxide group-terminated polymer of the formula (I) of any of claims 1 to 6 as an impact modifier, more particularly in epoxy resin-based compositions.

14. The use of an epoxy resin composition of any of claims 8 to 12 as an adhesive.

15. A cured composition obtained by heating a heat-curing epoxy resin composition of any of claims 8 to 11 to a temperature of 100-220°C.

16. An adhesively bonded article obtained by an adhesive bonding method comprising the steps of
i) contacting a heat-stable material, more particularly a metal, with a heat-curing epoxy resin composition of any of claims 8 to 11
ii) heating the composition to a temperature of 100-220°C.

## Revendications

1. Polymère terminé par des groupes époxyde de formule (I) 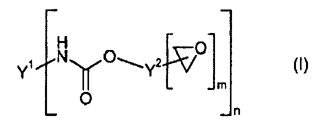 où
Y¹ représente un radical n-valent d'un polymère de polyuréthane **PU1** linéaire ou ramifié terminé par des groupes isocyanate après l'élimination des n groupes isocyanate en position terminale ;
Y² représente un radical d'un époxyde, contenant un groupe hydroxyle primaire ou secondaire, aliphatique, cycloaliphatique, aromatique ou araliphatique après l'élimination des groupes hydroxyde et époxyde ; m = 1, 2 ou 3 ; n = 2 à 8 ;
et où le polymère de polyuréthane **PU1** est obtenu à partir d'au moins un diisocyanate ou triisocyanate et d'au moins un diol non phénolique **Q₁** et d'au moins un polymère **Q₂** présentant des groupes hydroxyle, thiol, amino primaire ou amino secondaire en position terminale, et
le diol non phénolique **Q₁** présente un poids moléculaire de 60 à 400 g/mole et le polymère **Q₂** présente un poids moléculaire de 600 à 20 000 g/mole.

2. Polymère terminé par des groupes époxyde selon la revendication 1, **caractérisé en ce que** le diol non phénolique **Q₁** est un diol aliphatique ou cycloaliphatique ou araliphatique.

3. Polymère terminé par des groupes époxyde selon la revendication 2, **caractérisé en ce que** le diol non phénolique **Q₁** est un diol, qui est choisi dans le groupe constitué par le 1,4-butanediol, l'hexanediol, le cyclohexanediméthanol, le tricyclodécanediméthanol, le 3(4),8(9)-bis(hydroxyméthyl)-tricyclo[5.2.1.0(2,6)]décane, le xylylènediol, le bisphénol-A éthoxylé et le bisphénol-A propoxylé.

4. Polymère terminé par des groupes époxyde selon la revendication 1 ou 2 ou 3, **caractérisé en ce que** le polymère **Q₂** est un polyol aliphatique ou cycloaliphatique ou araliphatique.

5. Polymère terminé par des groupes époxyde selon la revendication 1 ou 2 ou 3, **caractérisé en ce que** le polymère **Q₂** est une polyamine aliphatique contenant un groupe éther.

6. Polymère terminé par des groupes époxyde selon l'une quelconque des revendications précédentes, **caractérisé en ce que** le rapport molaire **Q₂:Q₁** présente une valeur de 1:2 à 1:0,01.

7. Procédé pour la préparation d'un polymère terminé par des groupes époxyde selon l'une quelconque des revendications 1 à 6 par la réaction d'un polymère de polyuréthane **PU1** terminé par des groupes isocyanate avec un époxyde aliphatique, cycloaliphatique, aromatique ou araliphatique contenant un groupe hydroxyle primaire ou secondaire.

8. Composition de résine époxyde, contenant
- au moins une résine époxyde **A** comprenant en moyenne plus d'un groupe époxyde par molécule ;
- au moins un polymère terminé par des groupes époxyde de formule (I) selon l'une quelconque des revendications 1 à 6.

9. Composition de résine époxyde selon la revendication 8, **caractérisée en ce que** la composition de résine époxyde contient en outre au moins un durcisseur **B** pour résines époxydes, qui est activé par une température élevée et **en ce que** la composition de résine époxyde est thermodurcissable.

10. Composition thermodurcissable de résine époxyde selon la revendication 9, **caractérisée en ce que** la composition contient en outre un caoutchouc liquide **D.**

11. Composition thermodurcissable de résine époxyde selon l'une quelconque des revendications 9 à 10, **caractérisée en ce que** la composition de résine époxyde contient au moins un agent gonflant.

12. Composition thermodurcissable de résine époxyde selon l'une quelconque des revendications 9 à 11, **caractérisée en ce que** la proportion de polymère terminé par des groupes époxyde de formule (I) est de 1-45% en poids par rapport au poids de la composition.

13. Utilisation du polymère terminé par des groupes époxyde de formule (I) selon l'une quelconque des revendications 1 à 6 comme modificateur de la résilience.

14. Utilisation d'une composition de résine époxyde selon l'une quelconque des revendications 8 à 12 comme adhésif.

15. Composition durcie, qui est obtenue par chauffage d'une composition de résine époxyde thermodurcissable selon l'une quelconque des revendications 8 à 11 à une température de 100-220°C.

16. Objet collé, obtenu par un procédé de collage comprenant les étapes de
i) mise en contact d'un matériau stable à la chaleur, en particulier d'un métal avec une composition de résine époxyde thermodurcissable selon l'une quelconque des revendications 8 à 11
ii) chauffage de la composition à une température de 100-220°C.
